Europäisches Patentamt

European Patent Office

Office européen des brevets

(19)

(11) Veröffentlichungsnummer : **0 147 565 B1**

(12) **EUROPÄISCHE PATENTSCHRIFT**

(45) Veröffentlichungstag der Patentschrift :
19.08.87

(21) Anmeldenummer : 84112995.0

(22) Anmeldetag : 27.10.84

(51) Int. Cl.⁴ : **A 01 D 1/04**

(54) **Sichel (Rundsichel, Sensensichel).**

(30) Priorität : 23.11.83 DE 3342278

(43) Veröffentlichungstag der Anmeldung :
10.07.85 Patentblatt 85/28

(45) Bekanntmachung des Hinweises auf die Patenterteilung : 19.08.87 Patentblatt 87/34

(84) Benannte Vertragsstaaten :
AT BE DE FR GB IT LU NL

(56) Entgegenhaltungen :
AT-B- 304 121
CH-A- 509 033
DE-C- 32 185
DE-C- 143 310
DE-C- 835 959
US-A- 2 070 190

(73) Patentinhaber : **Julius Cronenberg o.H.
Sophienhammer
D-5760 Arnsberg 1, Müschede (DE)**

(72) Erfinder : **Cronenberg, Dieter-Julius
Friedrich-Naumann-Strasse 1
D-5760 Arnsberg 1 (DE)**
Erfinder : **Faflek, Jenö
Kronenstrasse 5
D-5760 Arnsberg 1 Müschede (DE)**

(74) Vertreter : **Fritz, Herbert, Dipl.-Ing.
Mühlenberg 74
D-5760 Arnsberg 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine Sichel, bei welcher das Sichelblatt, an dem der Handgriff befestigt ist, aus Kunststoff besteht und das zur Verstärkung ein angeformtes Rückenteil hat. Ein Messerteil mit Schneide aus Stahl ist am Blatt angebracht.

Bei Sicheln dieser Art liegt das Bestreben zugrunde den Aufwand für den verhältnismäßig teuren Schneidstahl zu sparen. Auch soll es nicht mehr erforderlich sein, daß das Blatt, wie bei einheitlichen Stahlsicheln üblich, vor dem Schleifen gedengelt, daß heißt durch Hämmern auf eine minimale Blattstärke gebracht wird.

Aus der DE-C-835 959 ist eine Sense bekannt geworden, bei der ein dünnes Schneidblatt in einen schmalen und zur Verstärkung profilierten Bügel eingesetzt ist. Bei dem relativ breiten Schneidblatt wird der Aufwand an wertvollem Schneidstahl nich wesentlich herabgesetzt. Bekannt ist weiterhin (CH-A-509 033) eine Sichel mit einem Blatt, das aus Kunststoff bestehen kann, wo das Messer durch eine Reihe angeschraubter Rasierklingen gebildet ist. Weiterhin ist (DE-C-143 310) eine Sense bekannt mit einem profiliertem Bügel als Rücken, an dem eine bandartige Schneide angeklemmt ist. Sowohl bei dieser bekannten Sense als auch bei der vorgenannten Sichel sind beim Mähen erhöhte Kräfte erforderlich, weil vorstehende Befestigungselemente dem Mähgut einen Widerstand entgegensetzten. Keines der vorgenannten bekannten Geräte konnte in der Praxis Eingang finden.

Die Aufgabe der Erfindung besteht darin, eine Sichel der eingangs genannten Art zu finden, die praxisgerecht im Gebrauch ist und die Voraussetzungen für eine wirtschaftliche Herstellung bietet.

Diese Aufgabe wird durch eine Sichel mit den Merkmalen des unabhängigen Anspruchs 1 gelöst. Die beiden abhängigen Ansprüche beziehen sich auf eine besonders wirtschaftliche Ausführungsform einer Rundsichel und auf eine sogenannte Sensensichel mit dem prinzipiellen Lösungsmerkmalen der Erfindung.

Ein Sichelblatt mit diesen Merkmalen ist dünn und glatt und geht aufgrund seiner geringen Stärke und mangels irgendwelcher vorstehender Verbindungselemente leicht durch das Schneidgut. Trotz der geringen Blattstärke hat das Sichelblatt in Bezug auf Kräfte in der Blattebene durch seine Formgebung, insbesondere durch die Ausbildung des Rücken, eine hohe mechanische Festigkeit. Indessen ist die Biegsamkeit bei Auftreten von Kräften quer zur Blattebene gewahrt. Das Stahlband mit der Schneide steht nur ein relativ geringes Maß gegenüber dem Sichelblatt aus Kunststoff vor, so daß es fest gehalten ist und nachgeschliffen werden kann. Das Stahlband ist maximal 0,3 mm stark, so daß ein Dengeln nicht erforderlich .ist. Die erfindungsgemäße Lösung ist sowohl bei einer Rundsichel als auch bei einer sogennanten Sensensichel anwendbar und ebenso auch bei Sensen, die an einem Sensenbaum befestigt werden.

Das Blatt der Rundsichel kann gemäß der weiteren Erfindung mit dem Sichelgriff einheitlich als Kuntstoff-Formteil hergestellt werden, wodurch die Herstellung als Massenartikel noch wirtschaftlicher wird. Bei einer sogenannten Sensensichel nach der Erfindung kann die Nut im Bereich des Blattrückens an der Basis des Blattes in eine solche Ausnehmung übergehen, die geeignet ist, einen Haltebügel aufzunehmen, der in der Ausnehmung festgeschraubt wird.

Im folgenden werden Ausführungsbeispiele der Erfindung beschrieben unter Bezugnahme auf die beiliegenden Zeichnungen.

Figur 1 ist eine Draufsicht auf eine Rundsichel nach der Erfindung ;

Figur 2 ist eine Ansicht dieser Sichel im Griffbereich von der gegenüberliegenden Seite ;

Figur 3 ist eine Ansicht in Richtung des Pfeiles III von Fig. 1 ;

Figur 4 ist ein Schnitt nach IV-IV von Fig. 1 ;

Figur 5 ist eine Draufsicht auf eine Sensensichel nach der Erfindung ;

Figur 6 ist eine Ansicht dieser Sensensichel von der anderen Seite ;

Figur 7 zeigt in vergrößertem Maßstab einen Schnitt nach VII-VII von Fig. 6 ;

Figur 8 zeigt in vergrößertem Maßstab einen Schnitt nach VIII-VIII von Fig. 6.

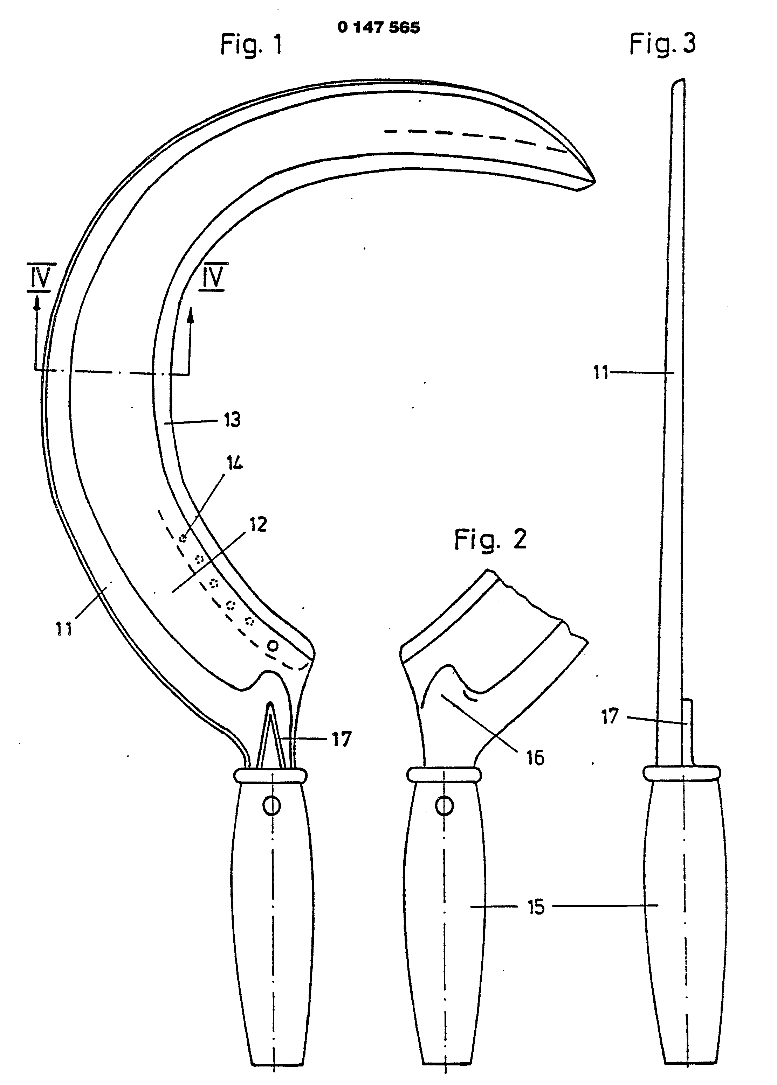

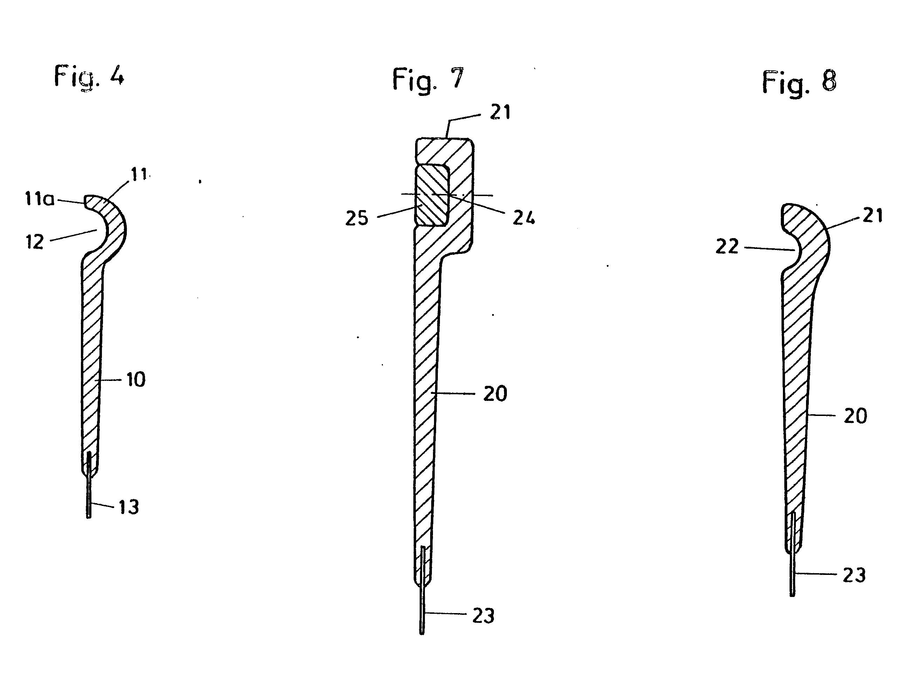

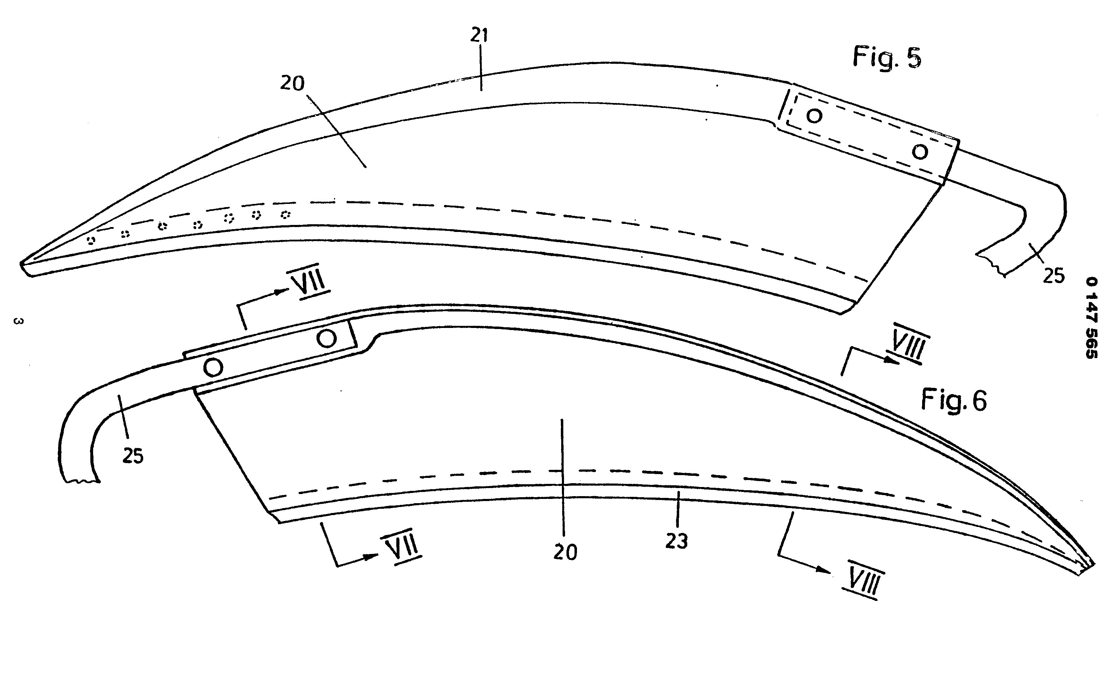

Das Blatt 10 der Rundsichel nach Fig. 1 bis 4 besteht aus glasfaserverstärktem Kunststoff und hat eine Blattstärke im Bereich von 2 mm bis 4 mm. Zur Erhöhung der mechanischen Festigkeit ist der Blattrücken 11 im Schnitt (Fig. 4) bogenförmig ausgebildet, wobei der Bogen sich nur nach einer Blattseite erstreckt, während an der anderen Blattseite, wo eine Nut 12 gebildet ist, die Stirnfläche 11a in der gleichen Ebene liegt wie die Ebene des Blattes selbst. In der Draufsicht wird der bogenförmige Rücken 11 vom Griff zur Blattspitze hin schmaler und niedriger.

Die Schneide der Sichel wird durch ein eingeformtes Stahlband 13 gebildet. Das Stahlband ist sehr dünn (Bereich von 0,3 mm), so daß es nicht gedengelt werden braucht. Das Stahlband 13 steht etwa 5-6 mm gegenüber dem Sichelblatt 10 über. Das Sichelblatt 10 ist im Übergangsbereich zu dem Stahlband 13 abgeschrägt wie Fig. 4 zeigt.

Das Stahlband 13 ist mit dem Sichelblatt durch Einformen fest verbunden. Das Stahlband 13 hat im Verbindungsbereich Durchbrechungen 14, wo der Kunststoff eindringt, so daß eine Verzahnung und eine besonders feste Verbindung entsteht.

Bei der Rundsichel nach Fig. 1 bis 4 sind Sichelblatt 10 und Griff 15 ein einheitliches Formteil. Im Übergangsbereich zwischen Sichelblatt und Griff 15 ist eine Sicke 16 geformt, welche in die Nut 12 des Blattrückens 11 übergeht. In der Sicke 16 sind außerdem zur Verstärkung noch zwei Rippen 17 in V-Ordnung gebildet.

Auch bei der Sensensichel nach Fig. 5 bis 8 besteht das Blatt 20 aus glasfaserverstärktem Kunststoff, hat eine Blattstärke von 2-4 mm und hat zur Verstärkung einen im Querschnitt (Fig. 8) bogenförmigen Rücken 21, durch den an der konkaven Seite eine Nut 22 gebildet ist. Auch in diesem Fall nimmt der verstärkte Rücken von der Basis des Sichelblattes zur Spitze hin an Höhe und an Breite ab. An der Basis geht die Nut 22 in eine Ausnehmung 24 zur Aufnahme eines Bügels 25 über. Der Bügel ist mit Schrauben befestigt.

## Patentansprüche

1. Sichel mit einem Blatt (10, 20) aus Kunststoff, an dem ein Handgriff (15) angebracht ist, als Verstärkung ein Rückenteil (11, 21) angeformt und ein Messerteil aus Stahl mit Schneide angebracht ist, gekennzeichnet durch die nachfolgenden Merkmale :

das Blatt (10, 20) besteht aus glasfaserverstärktem Kunststoff mit einer Blattstärke im Bereich von 2 mm bis 4 mm ;

der Rückenteil (11, 21) hat im Querschnitt die Form eines nur nach einer Blattseite gerichteten Bogens, der vom Griff zur Spitze hin schmaler und niedriger wird ;

der Messerteil ist ein in das Blatt (10, 20) eingeformtes Stahlband (13, 23) mit Schneide mit einer maximalen Stärke von 0,3 mm und einem Überstand im Bereich von 4 bis 7 mm.

2. Sichel nach Anspruch 1 dadurch gekennzeichnet, daß das Blatt (10) die Form einer herkömmlichen Rundsichel hat, wobei ein Griff (15) angeformt ist und im Übergangsbereich zwischen Griff und Blatt eine Sicke (16) mit Verstärkungsrippen (17) angeformt sind.

3. Sichel nach Anspruch 1 dadurch gekennzeichnet, daß das Blatt (20) die Form einer herkömmlichen Sensensichel hat, wobei an der Basis die Nut (22) des Blattrückens die Gestalt einer Ausnehmung (24) zur Aufnahme eines Bügels (25) hat.

## Claims

1. Sickle with a plastic blade (10, 20) with a handle (15) mounted thereto, an integrally formed back part (11, 21) for reinforcement and a knife part made of steel with a cutting edge, characterized by the following features :
the blade (10, 20) is made of glass-fiber reinforced plastic with a blade thickness within the range of 2 mm and 4 mm ;

the back part (11, 21) has as section formed as a curve aligned only to one side of the blade, which becomes narrower and lower from the handle to the top ;

the knife part is a steel band (13, 23), which is moulded into the blade (10, 20), with a cutting edge of a maximum thickness of 0.3 mm and an excess length between 4 and 7 mm.

2. Sickle according to claim 1, characterized in that the blade (10) has the form of a conventional arched sickle, a handle (15) being mounted thereto, with a bead (16) and reinforcing ribs (17) formed at the connecting part between handle and blade.

3. Sickle according to claim 1, characterized in that the blade (20) has the form of a conventional scythe-sickle, the groove (22) at the backside of the blade having the form of a recess (24) to receive a bow (25).

## Revendications

1. Faucille avec une lame (10, 20) en plastique sur laquelle une poignée est montée, avec une partie dorsale (11, 21) formée sur cette lame pour renforcement, et une partie de couteau en acier avec un taillant, ayant les caractéristiques suivantes :

la lame (10, 20) est en plastique renforcée en fibres de verre avec une épaisseur entre 2 mm et 4 mm ;

la partie dorsale (11, 21) en section a la forme d'une courbe alignée seulement vers l'un côté de la lame, cette courbe devenant plus étroite et plus basse de la poignée à la pointe ;

la partie de couteau est un feuillard d'acier (13, 23) coulé dans la lame (10, 20), avec un taillant en épaisseur maximum de 0,3 mm et une extrémité entre 4 et 7 mm.

2. Faucille selon la revendication 1, caractérisée en ce que la lame (10) a la forme d'une faucille arguée conventionnelle, avec une poignée (15) formée là-dessus et avec une moulure (16) avec des nervures de renforcement (17) formée au raccordement entre la poignée et la lame.

3. Faucille selon la revendication 1, caractérisée en ce que la lame (20) a la forme d'une faux-faucille conventionnelle, avec une rainure (22) à la base de la partie dorsale, en forme de gorge (24) qui reçoit une fourchette (25).

Fig. 1

Fig. 3

Fig. 2

Fig. 4

Fig. 7

Fig. 8

11a
11
12
10
13

21
25
24
20
23

22
21
20
23

0 147 565

Fig. 5

Fig. 6

0 147 565